# EUROPÄISCHE PATENTANMELDUNG

(11) **EP 3 890 081 A1**
(43) Veröffentlichungstag der Anmeldung: **06.10.2021**
(21) Anmeldenummer: 21166534.4
(22) Anmeldetag: 01.04.2021
(51) Int. Cl.: H01M 8/04119, H01M 8/249

(54) **SAMMELVORRICHTUNG FÜR EIN SAMMELN VON PRODUKTWASSER IN EINEM ANODENPFAD EINES BRENNSTOFFZELLENSYSTEMS**

(30) Priorität: 02.04.2020 AT 502782020
(71) Anmelder: AVL List GmbH, 8020 Graz (AT)
(72) Erfinder: Mair, Frank, 8010 Graz (AT); Schenk, Alexander, 8580 Köflach (AT)
(74) Vertreter: Mathys & Squire

(57) **Zusammenfassung**

Die vorliegende Erfindung betrifft eine Sammelvorrichtung (10) für ein Sammeln von Produktwasser (PW) in einem Anodenpfad, insbesondere in einem Anodenabführabschnitt (122), eines Brennstoffzellensystems (100), aufweisend einen Sammelbehälter (20) und einen Wasserabscheider (30) als Teil des Anodenpfades, insbesondere des Anodenabführabschnitts (122), in fluidkommunizierender Verbindung mit dem Sammelbehälter (20) zum Abscheiden des Produktwassers (PW) in den Sammelbehälter (20), weiter aufweisend eine Ventilvorrichtung (40) in fluidkommunizierender Verbindung mit dem Sammelbehälter (20) zum Entleeren des Sammelbehälters (20), wobei die Ventilvorrichtung (40) zwischen einer Schließposition (SP), einer ersten Öffnungsposition (OP1) und wenigstens einer zweiten Öffnungsposition (OP2) verstellbar ausgebildet ist, wobei weiter die Ventilvorrichtung (40) in erster Öffnungsposition (OP1) eine erste Wasserzufuhr (50) zu einem Wasserverbraucher (WV) des Brennstoffzellensystems (100) öffnet und in zweiter Öffnungsposition (OP2) eine zweite Wasserzufuhr (60) zu einem Wasserverbraucher (WV) eines benachbarten, zweiten Brennstoffzellensystems (100) öffnet.

## Beschreibung

Die vorliegende Erfindung betrifft eine Sammelvorrichtung für ein Sammeln von Produktwasser in einem Anodenabführabschnitt eines Brennstoffzellensystems. Ein Brennstoffzellensystem mit einer solchen Sammelvorrichtung, ein Brennstoffzellennetzwerk mit wenigstens zwei Brennstoffzellensystemen sowie ein Verfahren für einen Ausgleich eines Wasserverbrauchs in einem solchen Brennstoffzellennetzwerk.

Es ist bekannt, dass beim Betrieb von Brennstoffzellensystemen sogenanntes Produktwasser entsteht. Beim Betrieb der Brennstoffzelle zur Stromerzeugung wird bei der Umsetzung des Betriebsfluides, zum Beispiel Wasserstoff oder Erdgas, im Abgas Wasser erzeugt. Dieses Wasser wird als sogenanntes Produktwasser bezeichnet. Weiter ist es ebenfalls bekannt, dieses Produktwasser aus dem Gasstrom des Anodenabgases abzuscheiden und zu sammeln. Bekannte Lösungen dienen dazu, dieses Produktwasser separat abzuführen über sogenannte Drainventile. Auch ist es bekannt, das Produktwasser zu verwenden, um innerhalb eines Brennstoffzellensystems dieses Wasser wiederzuverwenden. Eine Möglichkeit für die Wiederverwendung ist dabei die Kühlung von Gasströmen, welche dem Brennstoffzellenstapel zugeführt werden oder diesen verlassen. Eine weitere bekannte Möglichkeit der Nutzung von Produktwasser ist die Verwendung zur Befeuchtung von Gastströmen und damit zur indirekten Befeuchtung von Bestandteilen des Brennstoffzellenstapels.

Nachteilhaft bei den bekannten Lösungen ist es, dass üblicherweise das Produktwasser und dessen Entstehung sowie dessen Bevorratung nicht mit dem Bedarf an Produktwasser am jeweiligen Wasserverbraucher korreliert. So bestehen Produktionssituationen, in denen deutlich mehr Produktwasser zur Verfügung steht als aktuell verbraucht wird und Produktionssituationen, in welchen das Wasser im Sammelbehälter nicht ausreicht, um den Wasserbedarf zu decken. Sollen suboptimale Betriebsbedingungen die durch unzureichend zur Verfügung stehendes Produktwasser entstehen können vermieden werden, ist bei den bekannten Lösungen daher eine zusätzliche Wasserversorgung notwendig, was zu erhöhter Komplexität des Brennstoffzellensystems und erhöhtem Aufwand in den Kontrollfunktionen führt.

Es ist Aufgabe der vorliegenden Erfindung, die voranstehend beschriebenen Nachteile zumindest teilweise zu beheben. Insbesondere ist es auf Aufgabe der vorliegenden Erfindung, in kostengünstiger und einfacher Weise einen Ausgleich des Wasserverbrauchs und der Wassererzeugung in einem Brennstoffzellensystem zur Verfügung zu stellen.

Die voranstehende Aufgabe wird gelöst durch eine Sammelvorrichtung mit den Merkmalen des Anspruchs 1, ein Brennstoffzellensystem mit den Merkmalen des Anspruchs 9, ein Brennstoffzellennetzwerk mit den Merkmalen des Anspruchs 11 sowie ein Verfahren mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Sammelvorrichtung beschrieben sind, selbstverständlich auch im Zusammenhang mit dem erfindungsgemäßen Brennstoffzellensystem, dem erfindungsgemäßen Brennstoffzellennetzwerk sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Erfindungsgemäß ist eine Sammelvorrichtung für ein Sammeln von Produktwasser in einem Anodenpfad, insbesondere in einem Anodenabführabschnitt, eines Brennstoffzellensystems vorgesehen. Hierfür weist die Sammelvorrichtung einen Sammelbehälter sowie einen Wasserabscheider auf. Der Wasserabscheider ist als Teil des Anodenpfades, insbesondere des Anodenabführabschnitts, des Brennstoffzellensystems ausgebildet beziehungsweise in diesen integrierbar und weist eine fluidkommunizierende Verbindung mit dem Sammelbehälter zum Abscheiden des Produktwassers in den Sammelbehälter auf. Weiter weist die Sammelvorrichtung eine Ventilvorrichtung in fluidkommunizierender Verbindung mit dem Sammelbehälter zum Entleeren des Sammelbehälters auf. Diese Ventilvorrichtung ist zwischen einer Schließposition, einer ersten Öffnungsposition und wenigstens einer zweiten Öffnungsposition verstellbar ausgebildet. Dabei öffnet die Ventilvorrichtung in erster Öffnungsposition eine erste Wasserzufuhr zu einem Wasserverbraucher des Brennstoffzellensystems. In der zweiten Öffnungsposition öffnet die Ventilvorrichtung eine zweite Wasserzufuhr zu einem Wasserverbraucher eines benachbarten, zweiten Brennstoffzellensystems.

Erfindungsgemäß basiert der Kerngedanke darauf, Produktwasser aus dem Anodenabgas des Brennstoffzellensystems abzuscheiden. Hierfür können in bekannter Weise Wasserabscheider vorgesehen werden, welche in der Lage sind, das Wasser aus dem Anodenabführabschnitt aufzufangen, abzuscheiden und über die fluidkommunizierende Verbindung in den Sammelbehälter einzubringen. Der Sammelbehälter dient dann als Pufferspeicher zum Auffangen und Zwischenspeichern des abgeschiedenen Produktwassers.

Unter einem Anodenpfad ist dabei im Sinne der vorliegenden Erfindung der Teil des Brennstoffzellensystems zu verstehen, in welchem Anodenabgas strömen kann. Neben dem Anodenabführabschnitt kann dies bei einem Einsatz eines Rezirkulationsabschnitts für Anodenabgas auch ein Teil des Anodenzuführabschnitts sein. Insbesondere ist bei einer solchen Ausführung die Anordnung der Sammelvorrichtung in dem Bereich vor dem Stack und nach einer Zusammenführung zwischen Anodenzuführgas und Rezirkulationsgas denkbar. Ein solcher Anodenpfad kann auch als Anodenkreis bezeichnet werden. Grundsätzlich werden im Rahmen der Erfindung unter dem Anodenpfad alle Teile des Brennstoffzellensystems verstanden, in welchem Anodengas (Anodenzuführgas und Anodenabführgas) führbar sind. Insbesondere umfasst der Anodenpfad sowohl den Anodenabführabschnitt als auch den Anodenzuführabschnitt.

Grundsätzlich werden die erfindungsgemäßen Vorteile durch die Druckverhältnisse mit hohem Anodendruck und niedrigem Kathodendruck am besten durch die Anordnung der Sammelvorrichtung im Anodenpfad erzielt. Jedoch ist es selbstverständlich im Rahmen der vorliegenden Erfindung auch denkbar, die Sammelvorrichtung mit den gleichen Vorteilen im Kathodenpfad, insbesondere im Kathodenzuführabschnitt, einzusetzen. Dies kann zusätzlich oder alternativ zum Einsatz im Anodenpfad der Fall sein.

Ein erfindungsgemäßer Kerngedanke liegt nun darin, dieses Produktwasser nicht einfach über ein sogenanntes Drainventil an die Umgebung abzugeben oder innerhalb des Brennstoffzellensystems weiterzuverwenden, sondern vielmehr die Möglichkeit einer flexiblen Nutzung zu schaffen. Die Flexibilität in der Nutzung des gespeicherten Produktwassers aus dem Sammelbehälter wird durch die erfindungsgemäße Ausbildung der Ventilvorrichtung zur Verfügung gestellt. So ist diese Ventilvorrichtung mit insgesamt wenigstens drei unterschiedlichen Ventilstellungen ausgestattet. Neben einer Schließstellung, in welcher keine Abfuhr und damit kein Entleeren von Produktwasser aus dem Sammelbehälter stattfindet, sind zumindest zwei Öffnungspositionen vorgesehen. Außerdem ist die Sammelvorrichtung mit einer ersten Wasserzufuhr und einer zweiten Wasserzufuhr ausgestaltet, welche durch die erste Öffnungsposition und die zweite Öffnungsposition mit der Ventilvorrichtung geschaltet werden können. Durch das Integrieren von zwei separaten Wasserzufuhrmöglichkeiten und der Schaltbarkeit mit Hilfe der Ventilvorrichtung wird es nun also möglich flexibel das Produktwasser an unterschiedlichen Stellen einzusetzen. Dabei sind diese unterschiedlichen Stellen nicht auf ein und dasselbe Brennstoffzellensystem beschränkt, sondern vielmehr öffnet die Ventilvorrichtung die Nutzung des gespeicherten Produktwassers auch für weitere Brennstoffzellensysteme.

Insbesondere bei stationären Anlagen wird häufig eine Vielzahl von Brennstoffzellensystemen, wobei jedes Brennstoffzellensystem wenigstens einen Brennstoffzellenstapel aufweist, nebeneinander angeordnet. Dies führt zu einer besonders kostengünstigen Produktionsweise, da jedes einzelne Brennstoffzellensystem in modularer Weise hergestellt werden kann. Durch die benachbarte Anordnung zueinander kann die Gesamtleistung des daraus zur Verfügung gestellten Brennstoffzellennetzwerks im Wesentlichen beliebig vergrößert werden.

In erfindungsgemäßer Weise erlaubt nun die Sammelvorrichtung eine Quervernetzung für die Nutzung des gespeicherten Produktwassers. Sind also in einem später noch näher erläuterten Brennstoffzellennetzwerk zumindest zwei Brennstoffzellensysteme nebeneinander benachbart angeordnet, so stellt die Ventilvorrichtung der Sammelvorrichtung eine fluidkommunizierende Verbindung zwischen diesen beiden benachbarten Brennstoffzellensystemen her, so dass Wasserverbraucher von beiden Brennstoffzellensystemen aus dem Sammelbehälter des ersten Brennstoffzellensystems gespeist werden können. Dabei ist es unerheblich wie viele unterschiedliche Wasserverbraucher in jedem Brennstoffzellensystem gespeist werden sollen. Auch ist es unerheblich, ob es sich dabei um identische Brennstoffzellensysteme und/oder identische Wasserverbraucher handelt.

Wie aus der voranstehenden Erläuterung ersichtlich wird, kann nun definiert kontrolliert werden, in welchem Brennstoffzellensystem welcher Wasserbedarf mit welcher Wasserzufuhr aus dem gemeinsamen Sammelbehälter oder aus separaten Sammelbehältern versorgt werden soll. Es ist nun möglich bei unterschiedlichen Lastsituationen bei den einzelnen Brennstoffzellensystem und unterschiedlichen Produktwasserständen in den jeweiligen Sammelbehältern einen Querausgleich zur Verfügung zu stellen, welcher es erlaubt auch bei schwierigen Produktionssituationen den gewünschten Wasserverbrauch intern aus dem extrahierten Produktionswasser abzudecken.

Im Vergleich zu den bekannten Lösungen wird hiermit sowohl hinsichtlich des tatsächlichen Wasserverbrauchs, insbesondere bei Verbrauchsspitzen, aber auch hinsichtlich der zeitlichen Nutzung, also des Timings der Wasserzufuhr, eine deutlich vergrößerte Flexibilität zur Verfügung gestellt. Je nach tatsächlicher Einsatzsituation und Bandbreite der Nutzung der einzelnen Brennstoffzellensysteme kann dies dazu führen, dass auf eine separate externe Wasserzufuhr sogar gänzlich verzichtet werden kann. Neben der Flexibilität in der Kontrolle wird damit die Konstruktionsweise und der notwendige Bauraum für das jeweilige Brennstoffzellensystem und damit für das komplette Brennstoffzellennetzwerk deutlich reduziert. Weiter werden durch die erfindungsgemäße Lösung suboptimale Betriebsbedingungen wie zu trockener Betrieb des Brennstoffzellenstapels verhindert oder zumindest zeitlich verkürzt werden.

Es ist noch darauf hinzuweisen, dass die Ventilvorrichtung in beliebiger Weise ausgestaltet sein kann, um die einzelnen Schließpositionen und Öffnungspositionen zu erreichen. So kann es sich um kombinierte Multiventilmittel, aber auch um die später noch erläuterten separaten Einzel-Ventilmittel handeln. Die Integration des Wasserabscheiders in den Anodenabführabschnitt kann in direkter oder indirekter Weise zur Verfügung gestellt sein. Insbesondere ist der Wasserabscheider mit einem Wasserabscheidereingang und einem Wasserabscheiderausgang ausgebildet, wobei der Wasserabscheidereingang mit einem Eingangsanschluss des Anodenabführabschnitts und der Wasserabscheiderausgang mit einem Ausgangsanschluss am Anodenabführabschnitt angeschlossen werden kann. Über diese Schnittstellen ist es möglich, den Wasserabscheider komplett in den Anodenabführabschnitt zu integrieren oder einen Bypass zu einem Nebenstrom oder einem Hauptstrom des Anodenabgases zur Verfügung zu stellen.

Es kann Vorteile mit sich bringen, wenn bei einer erfindungsgemäßen Sammelvorrichtung die Ventilvorrichtung wenigstens ein Mehrweg-Ventilmittel in Form eines Mehrweg-Ventils aufweist, wobei das Mehrweg-Ventilmittel zwischen den Öffnungspositionen und insbesondere der Schließposition umschaltbar ist. Beispielsweise kann bei gewünschten zwei Öffnungspositionen bei zwei Wasserzufuhrmöglichkeiten ein Dreiwegeventil zur Verfügung gestellt werden, welches zwischen Schließposition, erster Öffnungsposition und zweiter Öffnungsposition umschaltbar ist. Insbesondere schließt dabei die jeweilige geschaltete Öffnungsposition die andere Öffnungsposition aus, sodass ausschließlich ein Umschalten zwischen den einzelnen Wasserzufuhrmöglichkeiten gegeben ist. Dies erlaubt es die Kontrollmöglichkeit noch weiter zu vereinfachen, da keine quantitative Aufteilung von Produktwasser auf unterschiedliche Wasserzufuhrmöglichkeiten notwendig ist. Selbstverständlich ist ein Mehrweg-Ventilmittel nicht auf zwei Öffnungspositionen begrenzt, sondern kann auch für drei, vier oder eine größere Anzahl von Öffnungspositionen eingesetzt werden.

Ebenfalls Vorteile kann es mit sich bringen, wenn bei einer erfindungsgemäßen Sammelvorrichtung die Ventilvorrichtung wenigstens zwei separate Einzel-Ventilmittel aufweist, wobei das erste Einzel-Ventilmittel zwischen einer Schließposition und der ersten Öffnungsposition und das zweite Einzel-Ventilmittel zwischen einer Schließposition und der zweiten Öffnungsposition verstellbar ist. Die beiden Einzel-Ventilmittel können damit separat voneinander geschaltet werden. Somit ist es auch möglich, dass beide Einzel-Ventilmittel sich in der Öffnungsposition befinden und somit beide Wasserzufuhrmöglichkeiten parallel gespeist werden. Sind drei oder mehr Wasserzufuhrmöglichkeiten gewünscht, so ist selbstverständlich auch eine Kombination mit dem Mehrweg-Ventilmittel gemäß dem voranstehenden Absatz im Rahmen der vorliegenden Erfindung denkbar. Selbstverständlich können sowohl bei Einzel-Ventilmitteln als auch bei Mehrweg-Ventilmitteln sowohl die später noch erläuterten qualitativen als auch die quantitativen Ventilmittel eingesetzt werden.

Weitere Vorteile bringt es mit sich, wenn bei einer erfindungsgemäßen Sammelvorrichtung die Ventilvorrichtung zumindest teilweise, insbesondere vollständig, als quantitative Ventilvorrichtung ausgebildet ist. Unter einer quantitativen Ventilvorrichtung ist zu verstehen, dass eine quantitative Kontrolle der Durchflussmenge durch die Ventilvorrichtung in die jeweilige Wasserzufuhr möglich ist. Somit kann die Durchflussmenge in Form eines Volumenstroms an den tatsächlichen Wasserverbrauch am jeweiligen Wasserverbraucher angepasst werden. Dies ist sowohl bei Mehrweg-Ventilmitteln als auch bei Einzel-Ventilmitteln denkbar. Die Kontrollierbarkeit wird auf diese Weise deutlich erhöht.

Ebenfalls vorteilhaft ist es, wenn bei einer erfindungsgemäßen Sammelvorrichtung die Ventilvorrichtung zumindest teilweise, insbesondere vollständig, als qualitative Ventilvorrichtung ausgebildet ist. Unter einer qualitativen Ventilvorrichtung ist im Sinne der vorliegenden Erfindung ein einfaches Schaltventil, welches zwischen Durchfluss- und Schließposition verstellbar ist, zu verstehen. Eine qualitative Ventilvorrichtung erlaubt also eine deutlich einfachere Kontrolle, da gerade keine Durchflussmengen kontrolliert werden müssen. Auch stellt eine qualitative Ventilvorrichtung üblicherweise ein deutlich kostengünstigeres und kompakteres Konstruktionskonzept zur Verfügung, sodass die Sammelvorrichtung kostengünstiger und einfacher ausgebildet werden kann. Es ist noch darauf hinzuweisen, dass selbstverständlich auch hinsichtlich qualitativer und quantitativer Ventilmittel eine Kombination dieser unterschiedlichen Ventilmittel in ein und derselben Sammelvorrichtung denkbar ist.

Weitere Vorteile sind erzielbar, wenn bei einer erfindungsgemäßen Sammelvorrichtung zumindest ein zweiter Wasserabscheider als Teil eines Anodenabführabschnitts eines benachbarten, zweiten Brennstoffzellensystems in fluidkommunizierender Verbindung mit dem Sammelbehälter vorgesehen ist für ein Abscheiden von Produktwasser aus dem zweiten Brennstoffzellensystem in den Sammelbehälter. Ein solcher Sammelbehälter kann auch als gemeinsamer Sammelbehälter oder integrierter Sammelbehälter verstanden werden. Selbstverständlich kann dieser gemeinsame Sammelbehälter auch für drei oder noch mehr Brennstoffzellensysteme vorgesehen sein. Er dient somit in zentraler Anordnung als Sammelmöglichkeit für das Produktwasser aus dem Anodenabschnitt von zwei oder sogar noch mehr Brennstoffzellensystemen und kann dementsprechend auch die Verteilung auf die zwei oder noch mehr Wasserverbraucher der unterschiedlichen Brennstoffzellensysteme übernehmen. Die zentrale Anordnung des Produktwassers erlaubt eine Reduktion der Komplexität sowie der Teile und darüber hinaus auch eine Reduktion des Kontrollaufwandes für die Querverteilung des darin enthaltenen Produktwassers.

Weitere Vorteile sind erzielbar, wenn bei einer erfindungsgemäßen Sammelvorrichtung die Ventilvorrichtungen in wenigstens eine Ausgleichsposition verstellbar ist, wobei die Ventilvorrichtung in der Ausgleichsposition einen Wasserausgleich aus dem Sammelbehälter in einen zweiten Sammelbehälter eines benachbarten, zweiten Brennstoffzellensystems öffnet. Dabei handelt es sich um eine Alternative oder eine zusätzliche Möglichkeit zu dem voranstehenden Absatz. Separate Brennstoffzellensysteme mit jeweils eigenen Sammelbehältern erlauben auf diese Weise einen Ausgleich zwischen den Sammelbehältern, sodass jedes Brennstoffzellensystem als eigenständiges und selbstständiges Modul eine eigene Sammelvorrichtung aufweisen kann. Dies erlaubt es, beliebige Brennstoffzellensysteme in Modulbauweise frei miteinander zu kombinieren und somit auch beliebig große Brennstoffzellennetzwerke zu schaffen. Insbesondere wird es auf diese Weise möglich eine Querverteilung zwischen den Sammelbehältern zur Verfügung zu stellen, um die spätere Kontrollierbarkeit noch weiter zu vereinfachen.

Vorteilhaft ist es weiter, wenn bei einer erfindungsgemäßen Sammelvorrichtung die Ventilvorrichtung in wenigstens eine Ablassposition verstellbar ist, wobei die Ventilvorrichtung in der Ablassposition eine Wasserabfuhr zum Ablassen von Produktwasser aus dem Sammelbehälter öffnet. Eine solche Ablassposition kann auch als Drainposition bezeichnet werden und dient dazu einen Überlauf des Sammelbehälters zu vermeiden. Eine Entleerung des Sammelbehälters findet über die Abwasserabfuhr vorzugsweise an die Umgebung statt und bedeutet sozusagen einen Wasserverlust des Brennstoffzellensystems. Diese Wasserzufuhr kann auch als Notablass bezeichnet werden, um bei hohen Produktionsmengen an Produktwasser einen Überlauf des einzelnen oder der Vielzahl an Sammelbehältern kostengünstig zu vermeiden.

Grundsätzlich kann es auch vorteilhaft vorgesehen sein, dass der Sammelbehälter im Kathodenpfad angeordnet ist, wobei hierbei insbesondere eine kleine Pumpe vorgesehen ist, um Produktwasser zum Wasserverbraucher zu fördern.

Ebenfalls Gegenstand der vorliegenden Erfindung ist ein Brennstoffzellensystem, zumindest aufweisend:
- zumindest einen Brennstoffzellenstapel mit einem Anodenabschnitt und einem Kathodenabschnitt,
- einen Anodenpfad mit einem Anodenzuführabschnitt zum Zuführen von Anodenzuführgas zu dem Anodenabschnitt,
- einen Kathodenzuführabschnitt zum Zuführen von Kathodenzuführgas zum Kathodenabschnitt,
- einen Anodenabführabschnitt zum Abführen von Anodenabgas,
- einen Kathodenabführabschnitt zum Abführen von Kathodenabgas,
- und insbesondere einen Kühlkreislauf.

Dabei ist in einem Anodenpfad, insbesondere in dem Anodenabführabschnitt, eine Sammelvorrichtung gemäß der vorliegenden Erfindung angeordnet. Der Anodenpfad umfasst insbesondere den Anodenzuführabschnitt und den Anodenabführabschnitt, wobei der Anodenabführabschnitt insbesondere eine Rezirkulationsleitung umfasst. Die Sammelvorrichtung kann insbesondere auch in der Rezirkulationsleitung angeordnet sein. Ein erfindungsgemäßes Brennstoffzellensystem bringt damit die gleichen Vorteile mit sich, wie sie ausführlich mit Bezug auf eine erfindungsgemäße Sammelvorrichtung erläutert worden sind.

Weiter von Vorteil ist es, wenn bei einem erfindungsgemäßen Brennstoffzellensystem das Brennstoffzellensystem einen Wasserverbraucher aufweist, wobei der Wasserverbraucher wenigstens einer der folgenden ist:
- Kühlvorrichtung,
- Befeuchtungsvorrichtung.

Bei der voranstehenden Aufzählung handelt es sich um eine nicht abschließende Liste. Selbstverständlich ist auch die Kombination mehrerer Wasserverbraucher in einem gemeinsamen Wasserverbraucher oder separat zueinander denkbar. Bevorzugt ist der Wasserverbraucher dabei im Kathodenzuführabschnitt des jeweiligen Brennstoffzellensystems angeordnet.

Ein weiterer Gegenstand der vorliegenden Erfindung ist ein Brennstoffzellennetzwerk, aufweisend wenigstens ein erstes Brennstoffzellensystem gemäß der vorliegenden Erfindung sowie wenigstens ein benachbartes zweites Brennstoffzellensystem, welches insbesondere ebenfalls gemäß der vorliegenden Erfindung ausgebildet sein kann. Somit bringt ein Brennstoffzellennetzwerk die gleichen Vorteile mit sich, wie sie ausführlich mit Bezug auf ein erfindungsgemäßes Brennstoffzellensystem sowie eine erfindungsgemäße Sammelvorrichtung erläutert worden sind. Es ist noch darauf hinzuweisen, dass es grundsätzlich ausreicht, wenn ein einziges Brennstoffzellensystem eine erfindungsgemäße Sammelvorrichtung aufweist. Es kann jedoch Vorteile mit sich bringen, wenn alle Brennstoffzellensysteme oder zumindest zwei oder mehr Brennstoffzellensysteme in erfindungsgemäßer Weise mit einer Sammelvorrichtung ausgestattet sind. Die Quervernetzung ist dabei vorzugsweise bidirektional, also in beiden Richtungen zum Ausgleich des notwendigen Wasserbedarfs zwischen den Brennstoffzellensystemen vorhanden. Die Verbindung der Wasserverbraucher in den beiden Brennstoffzellensystemen ist vorzugsweise über eine gemeinsame zentrale Sammelvorrichtung oder über einzelne Sammelvorrichtungen in jedem Brennstoffzellensystem als multidirektionale Quervernetzung denkbar.

Ebenfalls Gegenstand der vorliegenden Erfindung ist ein Verfahren für einen Ausgleich eines Wasserverbrauchs in einem Brennstoffzellennetzwerk gemäß der vorliegenden Erfindung. Ein solches Verfahren weist die folgenden Schritte auf:
- Bestimmen des Wasserbedarfs wenigstens eines Wasserverbrauchers in den Brennstoffzellensystemen,
- Bestimmen des Wasserstandes im Sammelbehälter der wenigstens einen Sammelvorrichtung,
- Schalten der Ventilvorrichtung der wenigstens einen Sammelvorrichtung auf Basis des bestimmten Wasserbedarfs und des bestimmten Wasserstandes.

Damit bringt ein erfindungsgemäßes Verfahren die gleichen Vorteile mit sich, wie sie ausführlich mit Bezug auf ein erfindungsgemäßes Brennstoffzellennetzwerk, mit Bezug auf ein erfindungsgemäßes Brennstoffzellensystem sowie mit Bezug auf eine erfindungsgemäße Sammelvorrichtung erläutert worden sind. Dabei kann selbstverständlich auch die Bestimmung des Wasserstandes in zwei oder mehr Sammelbehältern sowie in einem zentralen beziehungsweise gemeinsamen Sammelbehälter vorgenommen werden. Außerdem können für das Verfahren unterschiedliche Kontrollstrategien zugrunde gelegt werden. So kann beispielsweise eine Vorratsstrategie sicherstellen, dass in jedem Sammelbehälter ein Mindestwasserstand nicht unterschritten wird. Auch kann eine Befeuchtungsstrategie zur Verfügung gestellt werden, welche insbesondere die Prognose des zukünftigen Wasserverbrauchs des jeweiligen Brennstoffzellensystems berücksichtigt und die Befeuchtung auch für die prognostizierte Verbrauchssituation gewährleistet.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Sammelvorrichtung,
- Fig. 2: eine weitere Ausführungsform einer erfindungsgemäßen Sammelvorrichtung,
- Fig. 3: eine weitere Ausführungsform einer erfindungsgemäßen Sammelvorrichtung,
- Fig. 4: die Ausführungsform der Figur 3 mit der Ventilvorrichtung in erster Öffnungsposition,
- Fig. 5: die Ausführungsform der Figuren 3 und 4 mit der Ventilvorrichtung in zweiter Öffnungsposition,
- Fig. 6: eine Ausführungsform eines Brennstoffzellennetzwerks,
- Fig. 7: eine Ausführungsform eines Brennstoffzellennetzwerks,
- Fig. 8: eine weitere Ausführungsform eines Brennstoffzellennetzwerks,
- Fig. 9: eine weitere Ausführungsform eines Brennstoffzellennetzwerks.

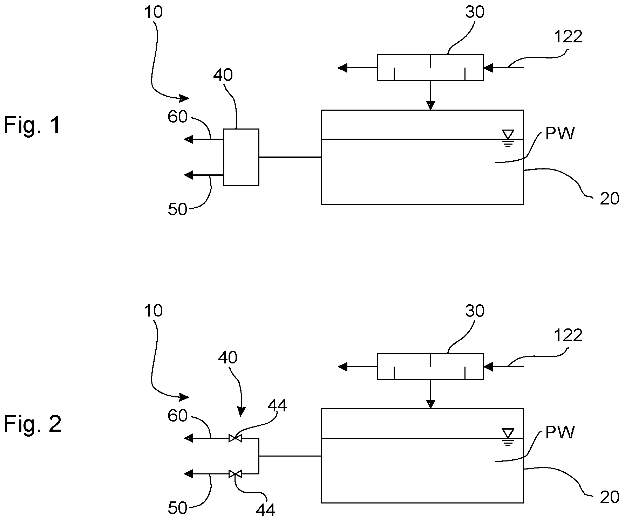

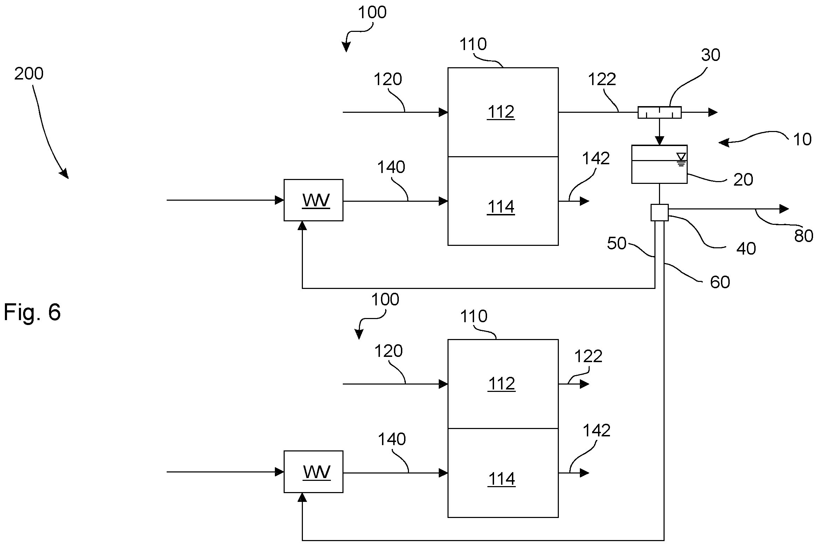

Figur 1 zeigt schematisch den Grundgedanken der vorliegenden Erfindung. So ist hier eine Sammelvorrichtung 10 zu erkennen, welche als Kernbestandteil den Sammelbehälter 20 aufweist. In diesem ist mit einem definierten Wasserstand Produktwasser PW enthalten, welches von einem Wasserabscheider 30 als Produktwasser PW aus dem Anodenabgas eines Anodenabführabschnittes 122 extrahiert worden ist. Um dieses Produktwasser PW aus dem Sammelbehälter 20 nutzen zu können, ist eine Rückführung über eine Ventilvorrichtung 40 möglich. Diese Ventilvorrichtung erlaubt ein Schalten zumindest auf eine erste Wasserzufuhr 50 und eine zweite Wasserzufuhr 60. Die Richtung, in welche die Wasserzufuhren 50 und 60 gerichtet sind, wird später noch mit Bezug auf die Figuren 6, 7 und 8 näher erläutert.

In der Figur 2 ist dargestellt, wie eine grundsätzliche Ventilvorrichtung 40 mit Einzel-Ventilmitteln 44 ausgestattet sein kann. So ist in jedem der Stränge der ersten Wasserzufuhr 50 und der zweiten Wasserzufuhr 60 nun ein separates Einzelventil 44 angeordnet, welche auch separat voneinander schaltbar sind. Hier ist gut zu erkennen, dass neben der Schließposition SP und den jeweiligen Öffnungspositionen OP1 und OP2 auch die erste Wasserzufuhr 50 und die zweite Wasserzufuhr 60 gleichzeitig und damit zeitlich parallel geöffnet werden können.

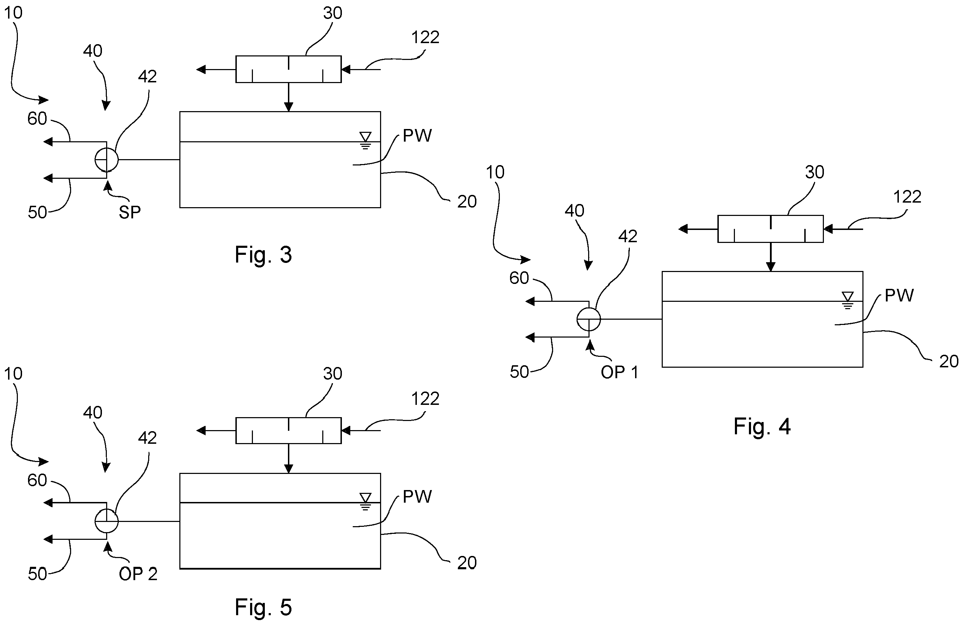

Die Figuren 3, 4 und 5 zeigen eine weitere Ausführungsform der Ventilvorrichtung 40. Dieses ist hier als Mehrweg-Ventilmittel 42, insbesondere als Dreiwegventil ausgebildet. In Figur 3 ist die Sammelvorrichtung 10 in Schließposition SP, in Figur 4 in erster Öffnungsposition OP1 und in Figur 5 in zweiter Öffnungsposition OP2 dargestellt. In der Schließposition SP der Figur 3 kann kein Produktwasser PW in die erste Wasserzufuhr 50 oder in die zweite Wasserzufuhr 60 gelangen. Gemäß Figur 4 befindet sich das Mehrweg-Ventilmittel 42 in der ersten Öffnungsposition OP1, sodass Produktwasser PW den Sammelbehälter 20 in die erste Wasserzufuhr 50 verlassen kann. In der Figur 5 befindet sich das Mehrweg-Ventilmittel 42 in der zweiten Öffnungsposition OP2, sodass entsprechend, das Produktwasser PW aus dem Sammelbehälter 20 in die zweite Wasserzufuhr 60 strömen kann. Wie hier gut zu erkennen ist, ist im Unterschied zu der Variante der Figur 2 ein Umschalten zwischen der ersten Öffnungsposition OP1 und der zweiten Öffnungsposition OP2 gegeben, sodass kein gleichzeitiges Öffnen beider Öffnungspositionen OP1 und OP2 möglich ist.

Figur 6 zeigt schematisch eine einfache Ausführungsform eines Brennstoffzellennetzwerks 200, hier mit zwei Brennstoffzellensystemen 100. Das obere Brennstoffzellensystem 100 ist dabei in erfindungsgemäßer Weise ausgestattet, sodass neben dem grundsätzlichen Aufbau im Anodenabführabschnitt 122 die Sammelvorrichtung 10 integriert ist. Beim Betrieb des Brennstoffzellensystems 100 wird nun über den Anodenzuführabschnitt 120 mit Anodenzuführgas versorgt, welches in den Anodenabschnitt 112 des Brennstoffzellenstapels 110 strömt. Im Kathodenzuführabschnitt 140, welcher Kathodenzuführgas zum Kathodenabschnitt 114 führt, ist ein Wasserverbraucher WV, zum Beispiel in Form eines Befeuchters und/oder einer Kühlvorrichtung angeordnet. Das Kathodenabgas wird über einen Kathodenabschnitt 142 separat abgeführt.

Wie der Figur 6 gut zu entnehmen ist, kann Produktwasser PW über den Wasserabscheider 30 im oberen Brennstoffzellensystem 100 aus dem Anodenabführabschnitt 122 extrahiert und im Sammelbehälter 20 gelagert werden. Hier ist die Ventilvorrichtung 40 schematisch als Kasten dargestellt und erlaubt die bereits erläuterte Aufteilung auf die erste Wasserzufuhr 50 und die zweite Wasserzufuhr 60. Hier ist gut zu erkennen, dass die erste Wasserzufuhr 50 die Rückführung zum Wasserverbraucher WV des oberen eigenen Brennstoffzellensystems 100 erlaubt. Jedoch ist die zweite Wasserzufuhr 60 mit dem benachbarten unteren Brennstoffzellensystem 100 verbunden und versorgt dort einen entsprechenden Wasserverbraucher WV. Hier ist gut die Quervernetzung zu erkennen, so dass aus einem Sammelbehälter 20 nicht nur das eigene Brennstoffzellensystem 100, sondern auch benachbarte Brennstoffzellensysteme 100 und insbesondere deren Wasserverbraucher WV versorgt werden können. In der Figur 6 ist darüber hinaus an der Ventilvorrichtung 60 eine Wasserabfuhr 80 dargestellt, welches es erlaubt Wasser aus dem Sammelbehälter 20 an die Umgebung abzuführen, wenn die Wasserproduktion den aktuellen Wasserverbrauch deutlich übersteigt und das Fassungsvermögen des Sammelbehälters 20 begrenzt ist.

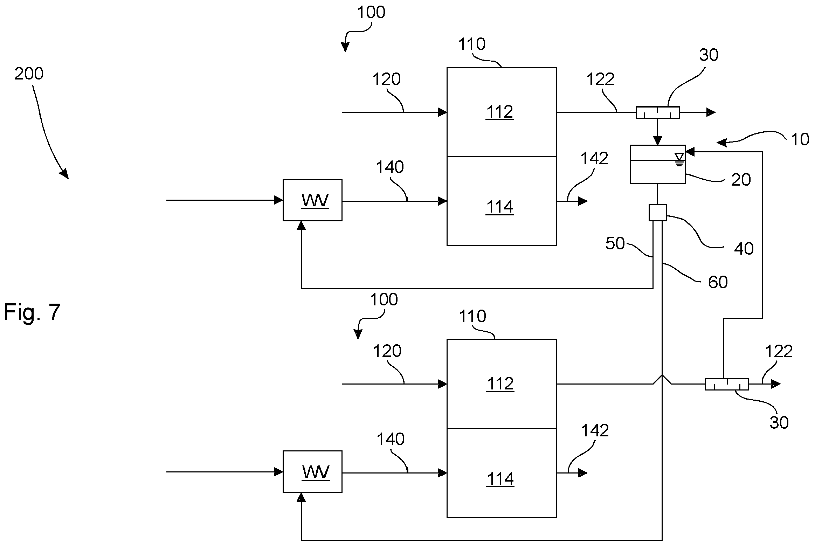

Die Figur 7 basiert auf der Lösung, wie sie mit Bezug zu Figur 6 erläutert worden ist. Jedoch ist der Sammelbehälter 20 hier als gemeinsamer oder zentraler Sammelbehälter 20 ausgebildet, welcher das Produktwasser auch von dem unteren Brennstoffzellensystem 100 erhält. Hierfür ist auch das untere Brennstoffzellensystem 100 im Anodenabführabschnitt 122 mit einem Wasserabscheider 30 ausgestattet, dessen abgeschiedenes Wasser in den gemeinsamen Sammelbehälter 20 eingebracht wird. Aus diesem gemeinsamen oder zentralen Sammelbehälter 20 kann nun in der erläuterten Weise gemäß der Figur 6 eine Versorgung der Wasserverbraucher WV für beide Brennstoffzellensysteme 100 gewährleistet werden.

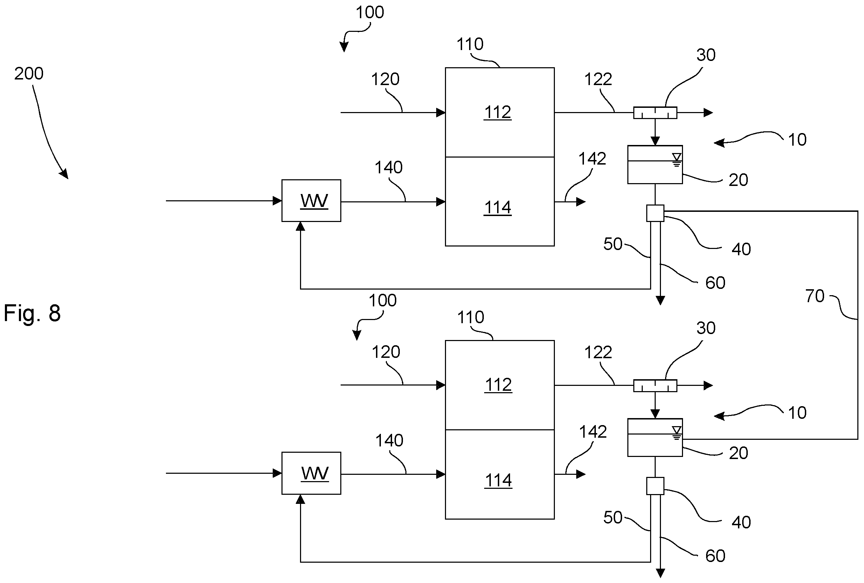

Figur 8 zeigt eine weitere Ausführungsform eines Brennstoffzellennetzwerks 200, welches insbesondere eine modulare Ausgestaltung der einzelnen Brennstoffzellen 100 aufweist. Jedes der Brennstoffzellensystem 100 ist mit einer eigenen vollständigen Sammelvorrichtung 10, insbesondere mit eigenem Sammelbehälter 20, ausgestattet. Diese beiden Sammelbehälter 20 sind dabei über einen Wasserausgleich 70 miteinander verbunden, welcher vorzugsweise in beiden Richtungen ausgestaltet ist, sodass in beiden Richtungen ein Ausgleich des Wasserstandes in den beiden Sammelbehältern 20 stattfinden kann. Der Übersichtlichkeit halber, ist die jeweils zweite Wasserzufuhr 60 pfeilartig dargestellt und führt selbstverständlich ebenfalls zu einem hier nicht dargestellten Wasserverbraucher WV, der jeweils entgegengesetzten Brennstoffzellensystems 100. Hier ist gut zu erkennen, dass durch den modularen Aufbau und die Identität jedes einzelnen Brennstoffzellensystems 100 ein solches Brennstoffzellennetzwerk 200 selbstverständlich auch drei, mehr oder beliebig viele solcher modular aufgebauten Brennstoffzellensysteme 100 aufweisen kann.

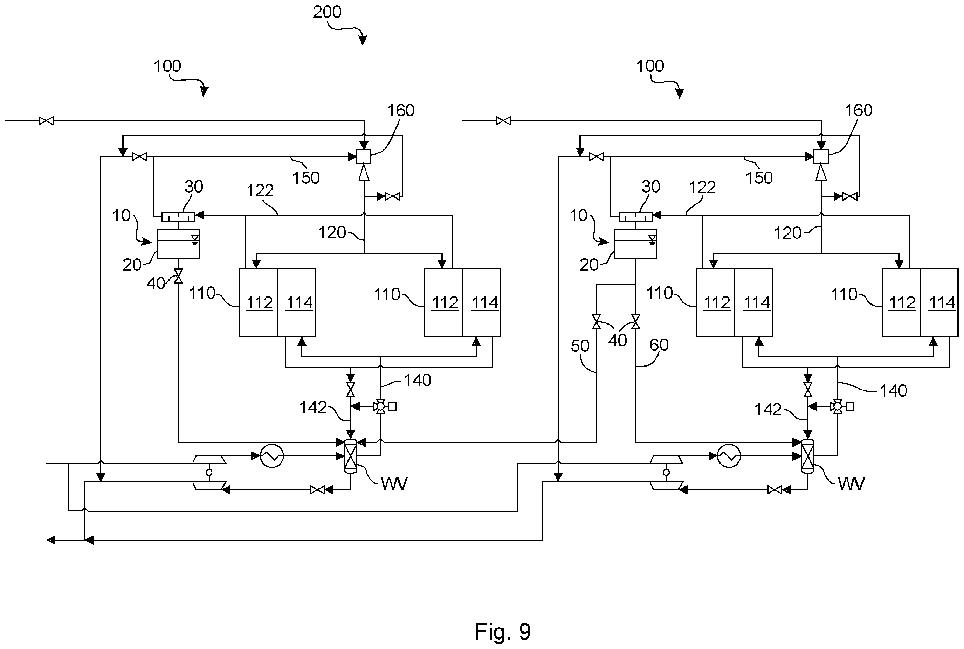

Die Figur 9 zeigt eine weitere Ausführungsform eines erfindungsgemäßen Brennstoffzellennetzwerks 200. Hier sind zwei benachbarte Brennstoffzellensysteme 100 vorgesehen, welche im Wesentlichen identisch ausgebildet sind. Anhand des rechten Brennstoffzellensystems 100 wird kurz die Funktionsweise erläutert. Aus einem Brennstofftank (nicht dargestellt) wird Brenngas in Form von Wasserstoff über ein Eingangsventil in das Brennstoffzellensystem 100 eingebracht. Nach einem Ejektor erfolgt eine Aufteilung des Brenngases auf zwei Brennstoffzellenstapel 110 und dort jeweils in den Anodenabschnitt 112. Das erzeugte Anodenabgas wird in einem Anodenabführabschnitt aufgefangen, aus den beiden Brennstoffzellenstapeln 110 zusammengeführt und Produktwasser PW über den Wasserabschnitt 30 der Sammelvorrichtung 10 in den Sammelbehälter 20 eingebracht. Auf diese Weise getrocknetes Anodenabgas kann entweder dem Abgasstrom nach einem Kompressor zugeführt oder über den Rezirkulationsabschnitt 150 in den Ejektor 160 rezirkuliert werden.

Wie der Figur 9 weiter zu entnehmen ist kann nun das aufgefangene Produktwasser PW aus dem Sammelbehälter 20 über die Ventilvorrichtung 40 entweder auf die linke, erste Wasserzufuhr 50 und/oder die rechte, zweite Wasserzufuhr 60 aufgeteilt werden. Auf diese Weise wird das Produktwasser dem jeweiligen Wasserverbraucher WV in Form eines Befeuchters des linken Brennstoffzellensystems 100 und/oder des rechten Brennstoffzellensystems 100 zugeführt und die erfindungsgemäßen Vorteile erzielt.

Die voranstehende Erläuterung der Ausführungsbeispiele beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Sammelvorrichtung
- 20: Sammelbehälter
- 30: Wasserabscheider
- 40: Ventilvorrichtung
- 42: Mehrweg-Ventilmittel
- 44: Einzel-Ventilmittel
- 50: erste Wasserzufuhr
- 60: zweite Wasserzufuhr
- 70: Wasserausgleich
- 80: Wasserabfuhr
- 100: Brennstoffzellensystem
- 110: Brennstoffzellenstapel
- 112: Anodenabschnitt
- 114: Kathodenabschnitt
- 120: Anodenzuführabschnitt
- 122: Anodenabführabschnitt
- 140: Kathodenzuführabschnitt
- 142: Kathodenabführabschnitt
- 150: Rezirkulationsabschnitt
- 160: Ejektor
- 200: Brennstoffzellennetzwerk
- PW: Produktwasser
- SP: Schließposition
- OP1: erste Öffnungsposition
- OP2: zweite Öffnungsposition
- WV: Wasserverbraucher

## Patentansprüche

1. Sammelvorrichtung (10) für ein Sammeln von Produktwasser (PW) in einem Anodenpfad, insbesondere in einem Anodenabführabschnitt (122), eines Brennstoffzellensystems (100), aufweisend einen Sammelbehälter (20) und einen Wasserabscheider (30) als Teil des Anodenpfades, insbesondere des Anodenabführabschnitts (122), in fluidkommunizierender Verbindung mit dem Sammelbehälter (20) zum Abscheiden des Produktwassers (PW) in den Sammelbehälter (20), weiter aufweisend eine Ventilvorrichtung (40) in fluidkommunizierender Verbindung mit dem Sammelbehälter (20) zum Entleeren des Sammelbehälters (20), wobei die Ventilvorrichtung (40) zwischen einer Schließposition (SP), einer ersten Öffnungsposition (OP1) und wenigstens einer zweiten Öffnungsposition (OP2) verstellbar ausgebildet ist, wobei weiter die Ventilvorrichtung (40) in erster Öffnungsposition (OP1) eine erste Wasserzufuhr (50) zu einem Wasserverbraucher (WV) des Brennstoffzellensystems (100) öffnet und in zweiter Öffnungsposition (OP2) eine zweite Wasserzufuhr (60) zu einem Wasserverbraucher (WV) eines benachbarten, zweiten Brennstoffzellensystems (100) öffnet.

2. Sammelvorrichtung (10) nach Anspruch 1, **dadurch gekennzeichnet, dass** die Ventilvorrichtung (40) wenigstens ein Mehrweg-Ventilmittel (42) in Form eine Mehrwegventils aufweist, wobei das Mehrweg-Ventilmittel (42) zwischen den Öffnungspositionen (OP1, OP2) und insbesondere der Schließposition (SP) umschaltbar ist.

3. Sammelvorrichtung (10) nach einem der vorangegangenen Ansprüche,
**dadurch gekennzeichnet, dass** die Ventilvorrichtung (40) wenigstens zwei separate Einzel-Ventilmittel (44) aufweist, wobei das erste Einzel-Ventilmittel (44) zwischen einer Schließposition (SP) und der ersten Öffnungsposition (OP1) und das zweite Einzel-Ventilmittel (44) zwischen einer Schließposition (SP) und der zweiten Öffnungsposition (OP2) verstellbar ist.

4. Sammelvorrichtung (10) nach einem der vorangegangenen Ansprüche,
**dadurch gekennzeichnet, dass** die Ventilvorrichtung (40) zumindest teilweise, insbesondere vollständig, als quantitative Ventilvorrichtung (40) ausgebildet ist.

5. Sammelvorrichtung (10) nach einem der vorangegangenen Ansprüche,
**dadurch gekennzeichnet, dass** die Ventilvorrichtung (40) zumindest teilweise, insbesondere vollständig, als qualitative Ventilvorrichtung (40) ausgebildet ist.

6. Sammelvorrichtung (10) nach einem der vorangegangenen Ansprüche,
**dadurch gekennzeichnet, dass** zumindest ein zweiter Wasserabscheider (30) als Teil eines Anodenpfades, insbesondere eines Anodenabführabschnitts (120), eines benachbarten, zweiten Brennstoffzellensystems (100) in fluidkommunizierender Verbindung mit dem Sammelbehälter (20) vorgesehen ist für ein Abscheiden von Produktwasser (PW) aus dem zweiten Brennstoffzellensystem (100) in den Sammelbehälter (20).

7. Sammelvorrichtung (10) nach einem der vorangegangenen Ansprüche,
**dadurch gekennzeichnet, dass** die Ventilvorrichtung (40) in wenigstens eine Ausgleichsposition verstellbar ist, wobei die Ventilvorrichtung (40) in der Ausgleichsposition einen Wasserausgleich (70) aus dem Sammelbehälter (20) in einen zweiten Sammelbehälter (20) eines benachbarten, zweiten Brennstoffzellensystems (100) öffnet.

8. Sammelvorrichtung (10) nach einem der vorangegangenen Ansprüche,
**dadurch gekennzeichnet, dass** die Ventilvorrichtung in wenigstens eine Ablassposition verstellbar ist, wobei die Ventilvorrichtung (40) in der Ablassposition eine Wasserabfuhr (80) zum Ablassen von Produktwasser (PW) aus dem Sammelbehälter (20) öffnet.

9. Brennstoffzellensystem (100), aufweisend
- zumindest einen Brennstoffzellenstapel (110) mit einem Anodenabschnitt (112) und einem Kathodenabschnitt (114),
- einen Anodenpfad mit einem Anodenzuführabschnitt (120) zum Zuführen Anodenzuführgas zu dem Anodenabschnitt (112),
- einen Kathodenzuführabschnitt (140) zum Zuführen von Kathodenzuführgas zum Kathodenabschnitt (114),
- einen Anodenabführabschnitt (122) zum Abführen von Anodenabgas,
- einen Kathodenabführabschnitt (142) zum Abführen von Kathodenabgas,
wobei im Anodenpfad, insbesondere im Anodenabführabschnitt (122), eine Sammelvorrichtung (10) mit den Merkmalen eines der Ansprüche 1 bis 8 angeordnet ist.

10. Brennstoffzellensystem (100) nach Anspruch 9, **dadurch gekennzeichnet, dass** das Brennstoffzellensystem (100) einen Wasserverbraucher (WV) aufweist, wobei der Wasserverbraucher (WV) wenigstens einer der folgenden ist:
- Kühlvorrichtung
- Befeuchtungsvorrichtung

11. Brennstoffzellennetzwerk (200), aufweisend wenigstens ein erstes Brennstoffzellensystem (100) mit den Merkmalen eines der Ansprüche 9 oder 10 und wenigstens ein benachbartes, zweites Brennstoffzellensystem (100), insbesondere mit den Merkmalen der Ansprüche 9 oder 10.

12. Verfahren für einen Ausgleich eines Wasserverbrauchs in einem Brennstoffzellennetzwerk (200) mit den Merkmalen des Anspruchs 11, aufweisend die folgenden Schritte:
- Bestimmen eines Wasserbedarfs wenigstens eines Wasserverbrauchers (WV) in den Brennstoffzellensystemen (100),
- Bestimmen des Wasserstandes im Sammelbehälter (20) der wenigstens einen Sammelvorrichtung (10),
- Schalten der Ventilvorrichtung (40) der wenigstens einen Sammelvorrichtung (10) auf Basis des bestimmten Wasserbedarfs und des bestimmten Wasserstandes.
